# EUROPEAN PATENT APPLICATION

(11) **EP 3 424 594 A1**
(43) Date of publication of application: **09.01.2019**
(21) Application number: 17180055.0
(22) Date of filing: 06.07.2017
(51) Int. Cl.: B01J 35/00, B01J 23/755, B01J 27/185, B01J 31/16, B01J 31/22, C01B 3/04

(54) **PHOTOCATALYTIC SYSTEM COMPRISING A TITANIUM-BASED MOF**

(71) Applicant: ECOLE POLYTECHNIQUE FEDERALE DE LAUSANNE (EPFL), 1015 Lausanne (CH)
(72) Inventor: STYLIANOU, Kyriakos, 1950 Sion (CH); SMIT, Berend, 1025 St-Sulpice (CH); KAMPOURI, Stavroula, 1950 Sion (CH); IRELAND, Chritopher P., 1962 Pont de la Morge (CH); NGUYEN, Ngoc Tu, 1950 Sion (CH)
(74) Representative: Byrne, Declan

(57) **Abstract**

The present invention concerns a photocatalytic system comprising or consisting of:
a titanium-based metal-organic framework MOF based on or including a single ligand type or a plurality of different ligand types for generating photo-generated charge carriers upon irradiation; and
a co-catalyst to thwart recombination of the photo-generated charge carriers and allow electrons to drive a chemical reaction, wherein the co-catalyst has a conduction band having an energy value or level that is (i) lower than or equal to that of a lowest unoccupied crystalline orbital LUCO of the titanium-based metal-organic framework MOF and (ii) higher than or equal to a reduction potential energy of H⁺ to H₂.

## Description

### FIELD OF THE INVENTION

The present invention concerns a photocatalytic system for hydrogen generation using ultra-violet, visible light or solar radiation. In particular, the present invention concerns a photocatalytic system comprising a metal-organic framework (MOF) based on or including a photocatalyst that is a single ligand type or a plurality of different ligand types for generating photo-generated charge carriers upon irradiation and a co-catalyst to attract electrons, prevent recombination of the photo-generated charge carriers and allow electrons to drive a chemical reaction, in particular, the reduction of water. The present invention further relates to a method for producing a photocatalytic system, a Hydrogen generator and Hydrogen generating method.

### BACKGROUND

'Solar-driven' water splitting for hydrogen (H₂) generation represents the 'Holy Grail' of energy science and technology. For decades, numerous photocatalytic systems have been developed but their low efficiency due to the limited sun-light absorptivity of the catalysts and their high cost and low water-stability, inhibits their use in industry.

Hydrogen (H₂) gas is widely produced and used in industries, particularly in fossil fuel processing and ammonia synthesis. In addition, it is considered a clean energy carrier for a sustainable energy future since the combustion of H₂ results in the generation of water and no greenhouse gasses, which eliminates the risk of climate change and allows for a carbon-neutral energy cycle. Traditional methods for H₂ production include the methane steam reforming and coal gasification; however, these processes also produce carbon dioxide as a by-product that needs to be captured and sequestered. H₂ can also be generated from water electrolysis using electricity but the electricity must also be obtained from a renewable energy source such as solar, wind, hydroelectric, or hydrothermal energy. A superior method to generate H₂ is through artificial photosynthesis, which utilizes the inexhaustible solar energy to directly convert water into H₂. Due to the sustainable nature of this procedure and the potential cost efficiency, many research efforts in materials science have been focused on developing novel photocatalytic systems that can enhance the rate of H₂ evolution and solar-to-hydrogen efficiency, with a 10% efficiency being the targeted lower limit for commercial applications.

A photocatalytic system can comprise of: i. a photocatalyst which absorbs light and generates charges, the electrons and the holes (charge carriers), with the electrons being responsible for reducing H₂O into H₂, *ii.* a co-catalyst which can enhance the charge-carrier separation; *iii.* a photosensitizer that may be used to extend the light absorption into the visible region, since UV light only accounts for ∼4 % of the incident solar energy; *iv.* a sacrificial reagent that is usually employed as an electron donor to scavenge the photogenerated holes in order to facilitate the charge transfer, and *v.* a redox shuttle which can expedite the charge transfer between the photocatalyst and the co-catalyst. In most cases, a photocatalyst is combined with a co-catalyst and a sacrificial reagent to generate H₂ upon light irradiation, whilst the use of photosensitizers and redox shuttles is optional. The negligible absorptivity of traditional photocatalysts such as TiO₂ and SnO₂ toward visible light, the low stability of other alternatives such as CdS or GaAs in water, and the high cost of noble metal co-catalysts are the main reasons why no photocatalytic systems have been industrially applied.

A metal-organic framework (MOF) is an infinite network of metal ions or clusters bridged by organic ligands through coordination bonds into a porous extended structure. Depending on the metal geometry and functionality and directionality of the ligand used, MOFs with different structure topologies, pore sizes and shapes, and physical properties can be synthesised. MOFs offer the exciting possibility to integrate the light harvesting moiety (ligand), the catalytic component (reductive metal ions), and intrinsic porosity (higher compared to oxides with the potential to absorb more light) into a single structure; therefore, the utilization of MOFs can be a pioneering key for the field of photocatalytic H₂ generation.

However, known MOF-based photocatalytic systems for visible-light-driven H₂ production are either expensive (complicated ligand synthesis, high cost of metal salts and noble-metal co-catalysts), they possess extremely low stability in water, they are active only under UV light, or they are not efficient and so have low solar-to-hydrogen/quantum efficiencies.

### SUMMARY OF THE INVENTION

The present invention addresses the above-mentioned limitations by providing a photocatalytic system comprising or consisting of:
- a titanium-based metal-organic framework MOF based on or including a single ligand type or a plurality of different ligand types for generating photo-generated charge carriers upon irradiation; and
- a co-catalyst to thwart recombination of the photo-generated charge carriers and allow electrons to drive a chemical reaction.

According to another aspect of the present disclosure, the co-catalyst has a conduction band having an energy value or level that is (i) lower than or equal to that of a lowest unoccupied crystalline orbital LUCO of the titanium-based metal-organic framework MOF and (ii) higher than or equal to a reduction potential energy of H⁺ to H₂.

According to another aspect of the present disclosure, the co-catalyst comprises or consists of particles or nanoparticles comprising or consisting of at least one transition metal phosphide or at least one transition metal oxide.

According to another aspect of the present disclosure, the system further including means for preventing the production of O₂, or means for removing produced O₂.

According to another aspect of the present disclosure, the titanium-based metal-organic framework MOF includes or consist of MIL-125-NH₂ or derivatives thereof.

According to another aspect of the present disclosure, the transition metal phosphide is Ni₂P, CoP or Fe₂P, or the transition metal oxide is NiO.

According to another aspect of the present disclosure, the means for preventing the production of O₂ includes triethylamine TEA, or triethanolamine TEOA, or ascorbic acid and related ascorbate anions, or ethylenediaminetetraacetic acid EDTA.

According to another aspect of the present disclosure, the means for removing produced O₂ includes a gas separating membrane.

According to another aspect of the present disclosure, the photocatalytic system is a noble-metal-free photocatalytic system.

According to another aspect of the present disclosure, the photocatalytic system is a photosensitizer-free photocatalytic system.

According to another aspect of the present disclosure, the ligand type is one of the following: 2-Aminoterephthalic acid, or 2,5-Diaminoterephthalic acid, or 2-Hydroxyterephthalic acid or 2,5-Dihydroxyterephthalic acid or 2-Bromoterephthalic acid or 2-Nitroterephthalic acid or 2,5-Dichloroterephthalic acid or 2-Methylterephthalic acid.

According to another aspect of the present disclosure, the transition metal phosphide is Ni₂P and the titanium-based metal-organic framework (MOF) includes or consists of MIL-125-NH₂.

Another aspect of the present disclosure concerns a mixture including the above-mentioned photocatalytic system and further including an organic solvent and water.

According to another aspect of the present disclosure, the organic solvent is acetonitrile or methanol.

Another aspect of the present disclosure relates to a hydrogen generator including the above-mentioned photocatalytic system or mixture.

Another aspect of the present disclosure concerns a Hydrogen generating method including the steps of:
- providing the above-mentioned mixture; and
- irradiating the mixture with electro-magnetic radiation in the UV and/or visible light region or with solar radiation.

Another aspect of the present disclosure concerns a method for producing a photocatalytic system, the method consisting of the steps of:
- providing a titanium-based metal-organic framework MOF based on or including a single ligand type or a plurality of different ligand types for generating photo-generated charge carriers upon irradiation;
   and
- mixing, with the titanium-based metal-organic framework MOF, a co-catalyst 7 to thwart recombination of the photo-generated charge carriers and allow electrons to drive a chemical reaction.

According to another aspect of the present disclosure, the co-catalyst has a conduction band having an energy value or level that is (i) lower than or equal to that of a lowest unoccupied crystalline orbital LUCO of the titanium-based metal-organic framework MOF and (ii) higher than or equal to a reduction potential energy of H⁺ to H₂.

The photocatalytic system according to the present invention simultaneously tackles these above mentioned challenges while exhibiting remarkable H₂ generation. The photocatalytic system according to the present invention can boost the H₂ evolution rate to, for example, an outstanding value of 894 µmol h⁻¹ g⁻¹ under visible light irradiation, which is one of the highest photocatalytic H₂ evolution rates reported for metal-organic frameworks (MOFs). Importantly, the system according to the present invention produces H₂ with an evolution rate of 3878 µmol h⁻¹ g⁻¹ under UV-Vis irradiation and outperforms known systems such as the Ni₂P/TiO₂ system. The present invention showcases the potential of MOFs to photocatalytically split water and generate remarkable amounts of H₂ with high quantum efficiencies at 400 and 450 nm, and demonstrates a versatile, easily prepared, and cost effective photocatalytic system for H₂ generation.

The above and other objects, features and advantages of the present invention and the manner of realizing them will become more apparent, and the invention itself will best be understood from a study of the following description with reference to the attached drawings showing some preferred embodiments of the invention.

### A BRIEF DESCRIPTION OF THE SEVERAL VIEWS OF THE DRAWINGS

Figure 1 schematically shows hydrogen generation using an exemplary photocatalytic system according to the present invention;
Figure 2a shows an energy diagram for MIL-125-NH₂, TiO₂, Ni₂P, cobaloxime and Pt;
Figure 2b shows PL spectra (excited at 420 nm) for the suspensions of MIL-125-NH₂ and MIL-125-NH₂ with different loadings of Ni₂P;
Figure 3a shows a H₂ evolution rate of a particular embodiment comprising MIL-125-NH₂ against different loadings of Ni₂P;
Figure 3b shows photocatalytic H₂ production of 9.2 w.t.% Ni₂P/MIL-125-NH₂ (diagonal), MIL-125-NH₂ (approx. parallel with x-axis), Ni₂P/H₂BDC-NH₂ (approx. parallel with x-axis) and Ni₂P (approx. parallel with x-axis), under visible light irradiation (λ > 420 nm) over 8 hours;
Figure 3c shows a Recycling performance of 8.9 w.t.% Ni₂P/MIL-125-NH₂;
Figure 3d shows PXRD patterns of Ni₂P/MIL-125-NH₂ before and after photocatalytic test;
Figure 3e shows a H₂ evolution rate of an optimised Ni₂P/MIL-125-NH₂ system with different water contents;
Figure 3f shows maximum H₂ evolution rates of 9.41w.t. % Ni₂P/MIL-125-NH₂ and 10.58w.t. % Ni₂P/TiO₂;
Figure 4a shows a High-Resolution TEM image of Ni₂P nanoparticles;
Figure 4b shows an Electron Diffraction pattern of Ni₂P nanoparticles;
Figure 4c is a SEM image of the as synthesized MIL-125-NH₂;
Figure 5a shows the UV-Visible absorbance of the ligand BDC-NH₂;
Figure 5b shows the UV-Visible Diffuse Reflectance of MIL-125-NH₂;
Figure 6 shows a Powder X-ray diffraction pattern of Ni₂P nanoparticles, the data was collected at ambient temperature on a Bruker D8 Advance diffractometer at 40 kV, 40 mA for Cu Kα (λ= 1.5418 Å), with a step size of 0.02° in 2θ, and a 2θ range of ∼2 to 70°;
Figure 7 shows the H₂ evolution rate of 17 mg TiO₂ against different loadings of Ni₂P nanoparticles (NPs);
Figure 8 shows powder X-ray diffraction patterns of Ni₂P/MIL-125-NH₂ after 24h visible light-driven Photocatalytic test in solutions containing different water content;
Figure 9a shows a N₂ adsorption-desorption isotherm of MIL-125-NH₂;
Figure 9b shows a N₂ adsorption-desorption isotherm of Ni₂P nanoparticles;
Figure 10 shows the photocatalytic performance towards H₂ evolution of optimized Ni₂P/TiO₂ and Ni₂P/MIL-125-NH₂, under UV-Vis light irradiation for 1.5mg and 1.8mg of Ni₂P NPs in 17 mg of MOF and TiO₂ respectively, in a 17 mL acetonitrile-based solution of 13.4 v/v% Triethylamine and 8.2 v/v% Water; and
Figure 11 shows a Hydrogen production rate for Ni₂P/MIL-125-NH₂, CoP/MIL-125-NH₂ and NiO/MIL-125-NH₂ under visible light irradiation.

Herein, identical reference numerals are used, where possible, to designate identical elements that are common to the Figures.

### DETAILED DESCRIPTION OF SEVERAL EMBODIMENTS

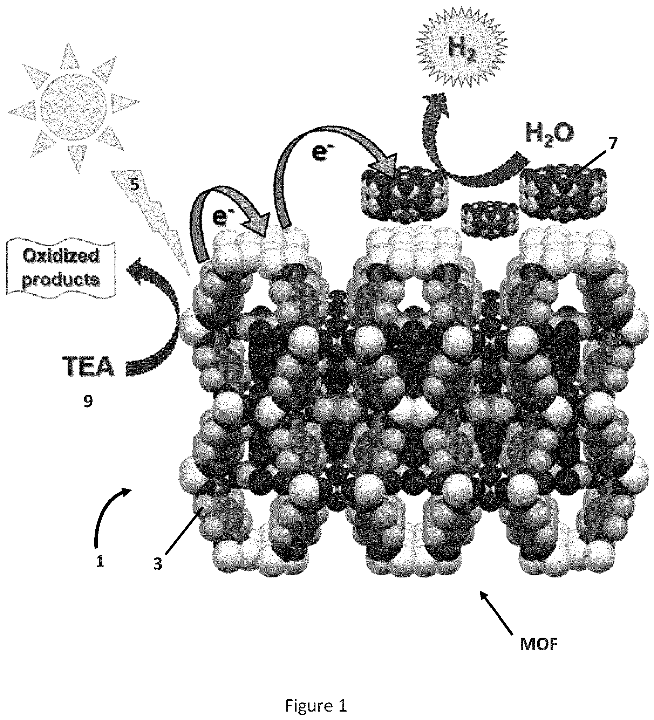

Figure 1 schematically shows hydrogen generation using an exemplary photocatalytic system 1 according to the present invention. The photocatalytic system 1 comprises a titanium-based metal-organic framework MOF based on or including a single ligand 3 type or a plurality of different ligand 3 types for generating photo-generated charge carriers upon irradiation by, for example, electro-magnetic radiation 5 in the UV and/or visible light region or with solar radiation.

The titanium-metal-organic framework MOF can include or consist of MIL-125-NH₂ or derivatives of MIL-125-NH₂.

The ligand type can be, for example, 2-Aminoterephthalic acid, or 2,5-Diaminoterephthalic acid, or 2-Hydroxyterephthalic acid or 2,5-Dihydroxyterephthalic acid or 2-Bromoterephthalic acid or 2-Nitroterephthalic acid or 2,5-Dichloroterephthalic acid or 2-Methylterephthalic acid.

The photocatalytic system 1 further includes a co-catalyst 7 to thwart recombination of the photo-generated charge carriers and allow electrons to drive a chemical reaction such as the reduction of water.

The co-catalyst 7 can, for example, have a conduction band having an energy value or level that is (i) lower than or equal to that of a lowest unoccupied crystalline orbital LUCO of the titanium-based metal-organic framework MOF, and (ii) higher than or equal to a reduction potential energy of H⁺ to H₂.

The energy level of the co-catalyst 7 is, for example, preferably lower than or equal to that of the lowest unoccupied crystalline orbital LUCO of the titanium-based metal-organic framework MOF so the photo generated electrons of the titanium-based metal-organic framework MOF which are in the conduction band can lose energy and move to a lower energy state of the conduction band of the co-catalyst 7 and then participate in the splitting of water to produce hydrogen.

The co-catalyst 7 is preferably configured or able to trap protons, transfer electrons, bond the hydrogen atoms, and desorb the formed H₂ molecules.

The co-catalyst 7 can comprise or consist of particles or nanoparticles NPs comprising or consisting of, for example, a transition metal phosphide or a transition metal oxide. The transition metal phosphide is preferably for example Ni₂P, CoP or Fe₂P. The transition metal oxide is, for example, NiO. Preferably, the nanoparticles have an average diameter in the range of 10 to 200nm, or 10 to 100nm, 10 to 50 nm or 10 to 30nm as measured by TEM.

The photocatalytic system 1 may further include a means or mechanism 9 for preventing the production of O₂, or a means or mechanism for removing O₂ produced, for example, during the reduction of water. The means or mechanism 9 for preventing the production of O₂ includes, for example, triethylamine (TEA), or triethanolamine (TEOA), or ascorbic acid and related ascorbate anions, or ethylenediaminetetraacetic acid (EDTA). The means or mechanism 9 for removing produced O₂ is, for example, a gas separating membrane configured to separate gases produced during the reduction of water.

The photocatalytic system 1 can be a noble-metal-free photocatalytic system. The use of a photosensitizer in the photocatalytic system 1 is not necessary and is optional and the photocatalytic system 1 can be a photosensitizer-free photocatalytic system.

A method for producing the photocatalytic system 1 can include or consist of providing the titanium-based metal-organic framework (MOF) based on or including a single ligand type or a plurality of different ligand types for generating photo-generated charge carriers upon irradiation; and mixing, with the titanium-based metal-organic framework (MOF), the co-catalyst 7 to thwart recombination of the photo-generated charge carriers and allow electrons to drive a chemical reaction, wherein the co-catalyst has a conduction band having an energy value or level that is (i) lower than or equal to that of a lowest unoccupied crystalline orbital (LUCO) of the titanium-based metal-organic framework (MOF) and (ii) higher than or equal to a reduction potential energy of H⁺ to H₂. The simply mixing of the titanium-based metal-organic framework (MOF) and the co-catalyst 7 permits hydrogen generation. The mixture is a non-bonded mixture in that the titanium-based metal-organic framework (MOF) and the co-catalyst 7 are not required to be bonded to one another and are not bonded to one another but only mixed together.

The photocatalytic system 1 can be a non-bonded mixture of the titanium-based metal-organic framework (MOF) and the co-catalyst 7.

To generate H₂ from water, the photocatalytic system is included in a mixture that also includes an organic solvent and water. The organic solvent can be, for example, acetonitrile or methanol. Alternatively, the photocatalytic system 1 can consist of the titanium-based metal-organic framework MOF and the co-catalyst 7 as described above and the mixture can include the means or mechanism 9 for preventing the production of O₂ (or a means or mechanism for removing O₂ produced), an organic solvent and water.

The mixture can form part of a hydrogen generator in which hydrogen is generated by irradiating the mixture with electro-magnetic radiation 5 in the UV and/or visible light region or with solar radiation.

A non-limiting embodiment of the present invention is now described in further detail.

An exemplary embodiment concerns a low-cost photocatalytic system 1 comprising an easily-prepared titanium-based metal-organic framework MOF that is the Ti-based MIL-125-NH₂, active in the visible region, and earth abundant Ni₂P nanoparticles as the co-catalyst 7. The photocatalytic performance of the system is presented and the exceptional synergy between titanium-based metal-organic frameworks and transition metal phosphides that leads to remarkable H₂ evolution rates and high quantum efficiency at 400 and 450 nm is discussed.

MIL-125-NH₂ is a 3-dimensional framework based on the 2-aminobenzene-1,4-dicarboxylate (NH₂-BDC) ligand and a Ti(IV)-oxo cluster (Ti₈O₈).

It can be synthesized and characterized, for example, as described in reference 16 (listed below).

The materials used can be, for example, 2-Aminobenzene-1,4-dicarboxylic acid (NH₂-BDC), Titanium isopropoxide (Ti[OCH(CH₃)₂]₄), nickel nitrate hexahydrate (Ni(NO₃)₂·6H₂O), cobalt nitrate hexahydrate (Co(NO₃)₂·6H₂O), iron(III) nitrate nonhydrate (Fe(NO₃)₃·9H₂O), Sodium Hypophosphite (NaH₂PO₂), anhydrous N'N-dimetylformanide (DMF; (CH₃)₂NCHO), anhydrous methanol (CH₃OH), acetonitrile (CH₃CN) and TEA (Triethylamine) which can be purchased from Sigma Aldrich. Benzene-1,3,5-tricarboxylic acid (C₆H₃(COOH)₃, BTC) can be purchased from TCI. All the materials were used as received.

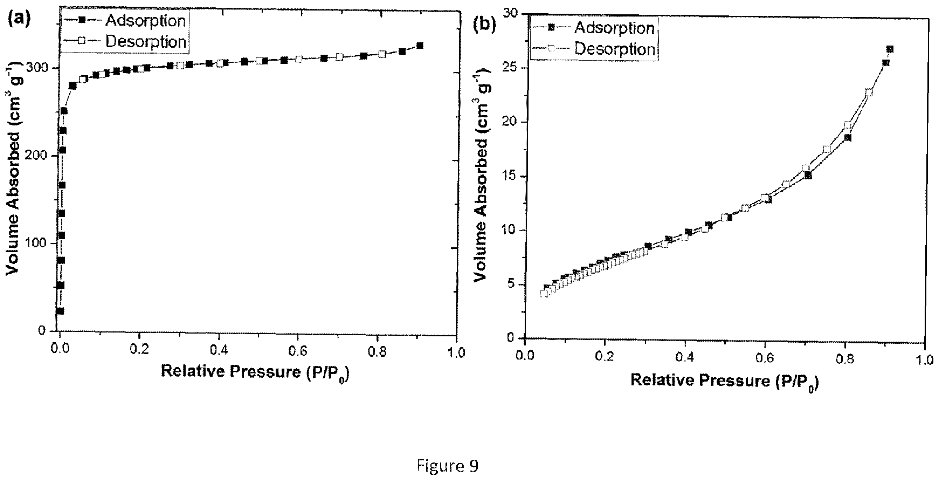

Nitrogen adsorption-desorption isotherms (Figure 9) were collected by using a BEL-SORP mini (BEL Japan, Inc.) at 77 K. Prior to data collection, the samples were degassed at 423 K for 12 h. The BET surface areas were estimated from the amount of N₂ adsorption at 77 K using the BET (Brunauer-Emmett-Teller) equilibrium equation. UV-vis absorbance and diffuse reflectance were obtained with a PerkinElmer UV-Vis Spectrometer. PL spectra (excitation at 360 and 420 nm) was measured with a Fluorescence Spectrometer LS 55 (PerkinElmer). The solid catalyst was immersed in MeCN/TEA/H₂O (9/1/0.1).

For the synthesis of MIL-125-NH₂, [Ti₈O₈(OH)₄-(O₂C-C₆H₃NH₂-CO₂)₆], the MOF was synthesized by dissolving 0.286 g of 2-Aminobenzene-1,4-dicarboxylic acid (NH₂-BDC) in a mixture of 4 mL of dry N,N-dimethylformamide (DMF) and 1mL of dry Methanol. 0.286 ml of Titanium isopropoxide was added in the mixture which was sonicated for 30 min and then heated up to 120 °C for 72h. The obtained product was washed several times with DMF and Methanol. Consequently, it was dispersed in DMF and kept under stirring for 12 h, in order to remove residual linker. This procedure was repeated twice using methanol, instead of DMF, in order to exchange the DMF within the pores. Finally, the as-synthesized powder was dried at room temperature.

For the synthesis of the MOF-derived Ni₂P nanoparticles (NPs), firstly the Ni-BTC MOF was synthesized by dissolving 0.255 g of nickel nitrate hexahydrate (Ni(NO₃)₂·6H₂O) and 0.1024 g of benzene-1,3,5-tricarboxylic acid (C₆H₃(COOH)₃, BTC) in 14 mL of methanol and then heating the mixture up to 150 °C for 24 h, using Teflon liners inserted in stainless steel autoclaves. The obtained solid was washed several times with methanol and then dried under vacuum at 60°C.

For the preparation of Ni₂P nanoparticles, 0.1 g of the as-prepared Ni-BTC and 0.3 g of Sodium Hypophosphite (NaH₂PO₂) were mixed together, loaded into a ceramic crucible, and heated to 275 °C for 2 h in a furnace. After cooling to room temperature, the product was washed with water and ethanol and dried under vacuum at 60 °C for 6 h.

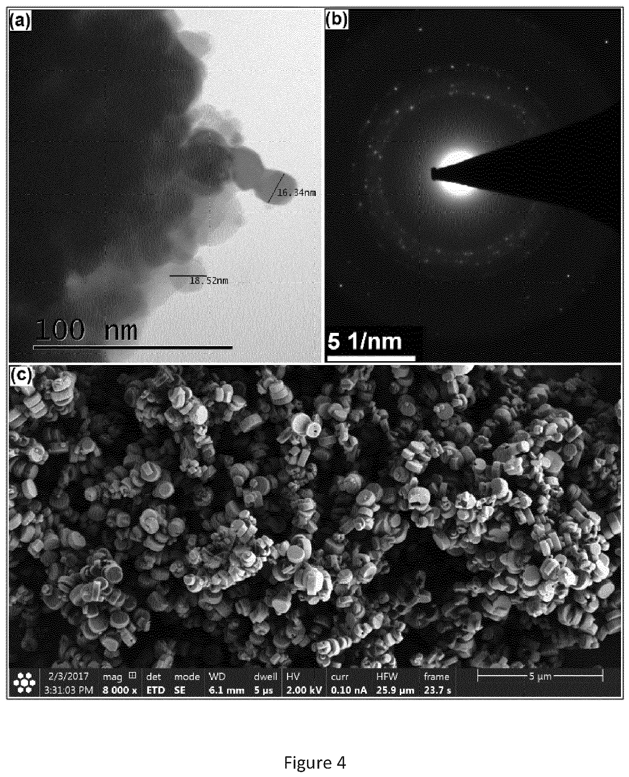

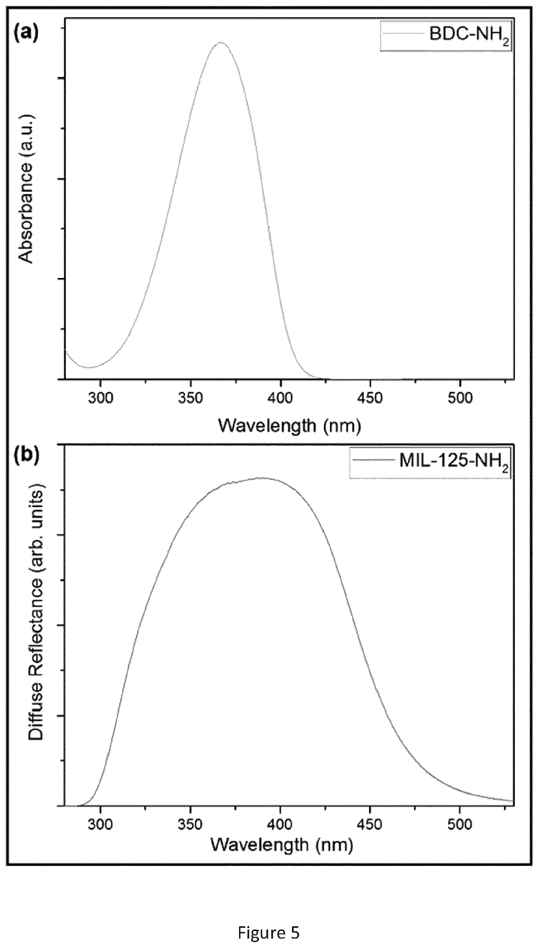

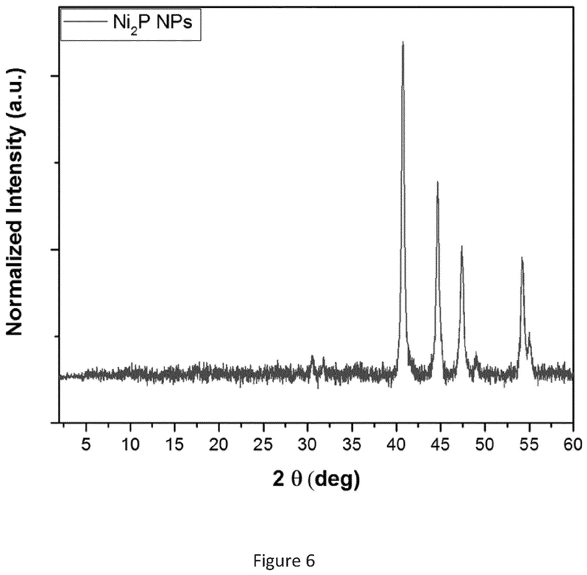

Scanning Electron Microscopy (SEM) images reveal that the morphology of the crystals is based upon circular plate (disc) shape with a mean particle size of 1 µm as can be seen in Figure 4c. The diffuse reflectance spectrum of MIL-125-NH₂ is red-shifted compared to the absorption spectrum of the NH₂-H₂BDC as seen in Figures 5a and 5b, indicating a ligand-to-metal charge transfer (LMCT). This results in a strong absorption in the range of 300-480 nm. The calculated optical gap of MIL-125-NH₂ is ∼2.6 eV. The Ni₂P nanoparticles can be synthesized via a method described in reference 32, and the powder X-ray diffraction (PXRD) pattern of the bulk solid (Figure 6) is in agreement with the reported pattern of reference 32. Their size is around 20 nm as illustrated in Figure 4a by Transmission Electron Microscopy (TEM) images and N₂ isotherm collected at 77 K reveals a BET surface area of 27.8 m² g⁻¹.

To assess the performance and optimize the composition of the photocatalytic system 1 toward H₂ generation, different combinations of powders of MIL-125-NH₂ and Ni₂P were mixed in a container or reactor containing a solvent mixture of acetonitrile (CH₃CN), triethylamine (TEA) as the sacrificial agent, and water.

The reactor was then irradiated with visible light by a 300 W Xe lamp using a long-pass cut-off filter allowing λ > 420 nm, and the generated H₂ was analyzed by gas chromatography.

The photocatalytic measurements were, for example, performed in a 25 mL Pyrex glass reactor, at room temperature under continuously visible light irradiation from a 300 W Xe lamp equipped with a UV cut-off filter (λ>420). 17 mg of the catalyst was suspended in 17 ml of a photocatalytic solution consisted of acetonitrile, triethylamine and deionized water in a ratio of 5 : 1: 0.1 respectively. Then, the suspension was purged with Nitrogen for 20 min under gentle stirring, in order to remove dissolved oxygen. 200 µL of the gaseous product was abstracted from the head space and analyzed by gas chromatography (PerkinElmer Clarus 480 GC, N₂ carrier gas), equipped with a Thermal Conductivity Detector and a Molecular Sieve 5 A column.

As can be seen in Figure 1a, when the loadings of the Ni₂P co-catalyst 7 increase while the amount of MIL-125-NH₂ is kept constant, the H₂ evolution rate increases since the co-catalyst 7 attracts the electrons efficiently and thus inhibits the charge carrier recombination. By reaching 9.2 w.t.% of Ni₂P, the H₂ evolution rate is maximized. At this ratio, there is an optimum level of interactions between Ni₂P and MIL-125-NH₂, promoting the electron transfer to the Ni₂P. Preferably, the co-catalyst w.t.% is between 8.2 w.t.% and 9.7 w.t.%.

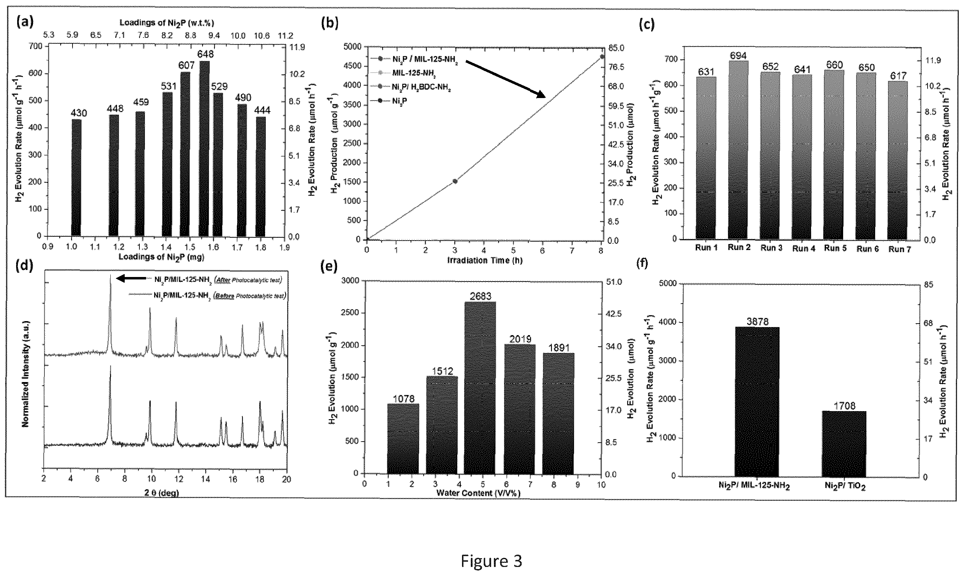

Further increasing the amount of Ni₂P leads to the decrease in the H₂ production rate, as the interaction between MIL-125-NH₂ and the Ni₂P is at its maximum, and the Ni₂P nanoparticles simultaneously compete with MIL-125-NH₂ in light absorption, inhibiting the incident light from reaching the MOF, i.e. the shielding-effect. As seen in Figure 3b, even with a small amount of water added, the Ni₂P/MIL-125-NH₂ system exhibits a highly enhanced activity that is almost 300 times higher than that of the pristine MIL-125-NH₂ (2.249 µmol h⁻¹ g⁻¹), reaching a H₂ evolution rate of 648 µmol h⁻¹g⁻¹ and 7865 µmols h⁻¹g⁻¹ with respect to MIL-125-NH₂ and Ni₂P, respectively.

Blank photocatalytic experiments using solely Ni₂P with and without the NH₂-H₂BDC resulted in no H₂ generation, confirming the unique advantage of having MIL-125-NH₂ as a photocatalyst within the system.

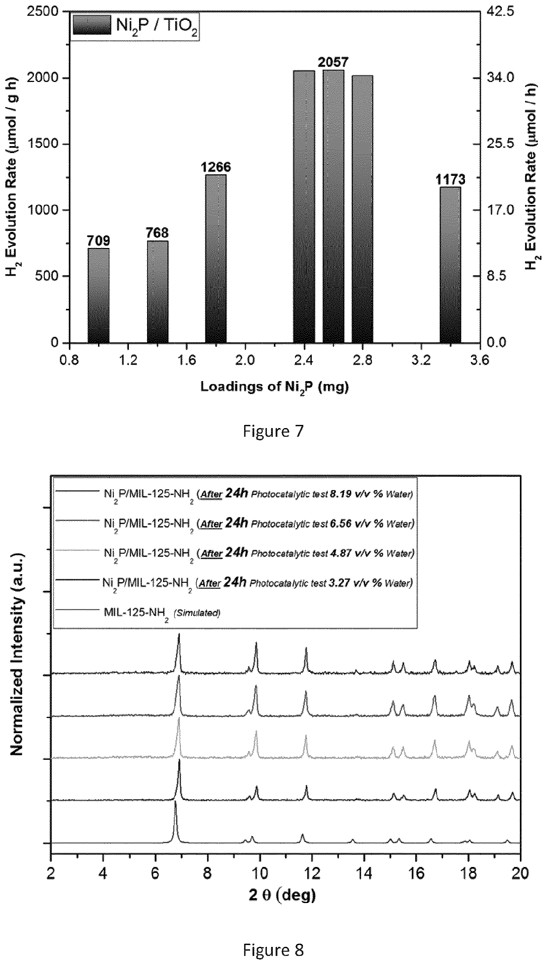

Moreover, recycling experiments for the optimum ratio between Ni₂P and MIL-125-NH₂ revealed that the H₂ evolution rate of this system remains stable for at least seven catalytic runs (each for 12 h, Figure 3c). The PXRD patterns of the pristine and post-exposed samples are comparable, confirming that the crystallinity of MIL-125-NH₂ is retained even after 84 h of continuous irradiation (Figure 3d). Figure 8 shows powder X-ray diffraction patterns of Ni₂P/MIL-125-NH₂ after 24h visible light-driven Photocatalytic test in solutions containing different water content.

In addition, the performance of NI₂P/MIL-125-NH₂ was examined by varying the solvent mixtures, the same amount of acetonitrile and TEA was kept, whereas the water content was varied from 1.63 v/v% to 8.19 v/v% (Figure 3e). By increasing the water content, at first, the H₂ evolution rate also increases since more protons are available to be reduced. With the optimum photocatalytic solution of 4.87 v/v% water, the photocatalytic system 1 reached a H₂ evolution rate of 894 µmol h⁻¹ g⁻¹ and 10134 µmol h⁻¹ g⁻¹ with respect to the MIL-125-NH₂ and Ni₂P, respectively. Preferably, the water content between 4 and 6.5 v/v% water.

These values significantly surpass known photocatalytic systems containing MIL-125-NH₂ and other co-catalysts as can be seen from Table 1 below:

**Table 1: Comparison of the photocatalytic performance of systems utilizing MIL-125-NH₂ as the photocatalyst with different co-catalysts under visible light irradiation.**

| Co-catalyst | Light Source λ (nm) | HER_{P} (µmol h⁻¹ g⁻¹) | Quantum Efficiency (%) | Stability (h) | Ref. |
|---|---|---|---|---|---|
| Pt NPs | ≥ 420 | *333 | - | > 9 | 17 |
| Pt NPs | ≥ 420 | *525 | | > 9 | 15 |
| Co^{III} oxime | ≥ 408 | *637 | 0.5 | > 70 | 16 |
| Ni₂P NPs | ≥ 420 | 894 | 6.6% (450nm) | > 84 | This Inv. |

| | | | | | |
|---|---|---|---|---|---|
| HERp: H₂ evolution rate with respect to the photocatalyst * Calculated based on reported data | | | | | |

To compare the photocatalytic MOF system 1 with TiO₂, the parallel photocatalytic performance of Ni₂P/MIL-125-NH₂ and Ni₂P/TiO₂ toward H₂ generation was investigated, under irradiations that include UV light since TiO₂ is characterized by an overly large optical band gap (∼3 eV) and thus operates only under UV irradiation.

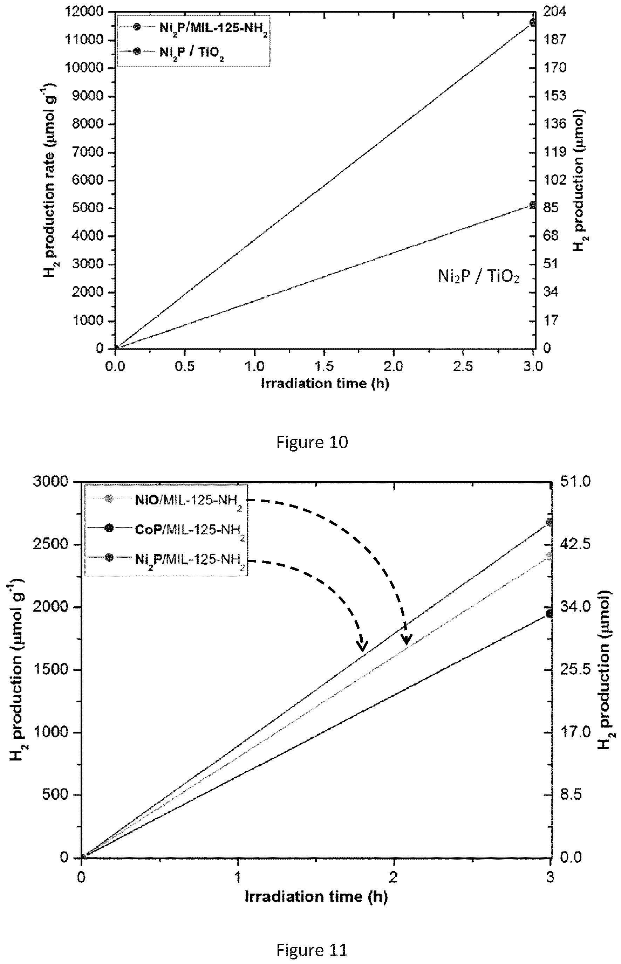

Commercial TiO₂ (P25, Degausa), which is a standard material in the field of TiO₂-photocatalyzed reactions with a relatively large surface area of 49 m² g⁻¹ was used, and the loadings of the Ni₂P were first varied in order to determine the optimum system, which contains 10.6 w.t.% of Ni₂P (Figure 7). The best performing Ni₂P/MIL-125-NH₂ and Ni₂P/TiO₂ systems generated H₂ with a rate of 3878 and 1708 µmols g⁻¹ h⁻¹, with respect to the MIL-125-NH₂ and TiO₂, respectively as seen in Figure 3f. It is apparent that by simple subtraction of the visible-light-driven H₂ evolution rate previously obtained (894 µmol h⁻¹ g⁻¹), Ni₂P/MIL-125-NH₂ outperforms Ni₂P/TiO₂ even in the UV light region. This can be attributed to the high porosity of MIL-125-NH₂ that allows for easy light penetration compared to the solid TiO₂, the high molar absorptivity of the ligand, and particularly the exceptional synergy between MIL-125-NH₂ and the Ni₂P nanoparticles. Figure 10 shows the photocatalytic performance towards H₂ evolution of optimized Ni₂P/TiO₂ and Ni₂P/MIL-125-NH₂, under UV-Vis light irradiation for 1.5mg and 1.8mg of Ni₂P NPs in 17 mg of MOF and TiO₂ respectively, in a 17 mL acetonitrile-based solution of 13.4 v/v% Triethylamine and 8.2 v/v% Water.

The NH₂-BDC within MIL-125-NH₂ acts as an antenna that absorbs light and promotes an electron from the Highest Occupied Crystalline Orbitals (HOCOs) to the Lowest Unoccupied Crystalline Orbitals (LUCOs) of MIL-125-NH₂.

The HOCOs comprise mainly the π orbitals of the ligand while the LUCOs are composed of the Ti 3d orbitals; therefore, the electron transitions represent a LMCT process.

Upon illumination, electron-hole pairs are created and the hole localized in the MIL-125-type material and restricted in movement, whereas the electron is delocalized, and free to migrate to the Ti-3d orbitals thus allowing effective charge separation.

Subsequently, in the photocatalytic system 1, the photo-excited electron is transferred from the LUCOs of MIL-125-NH₂ to Ni₂P and then to the protons of water molecules.

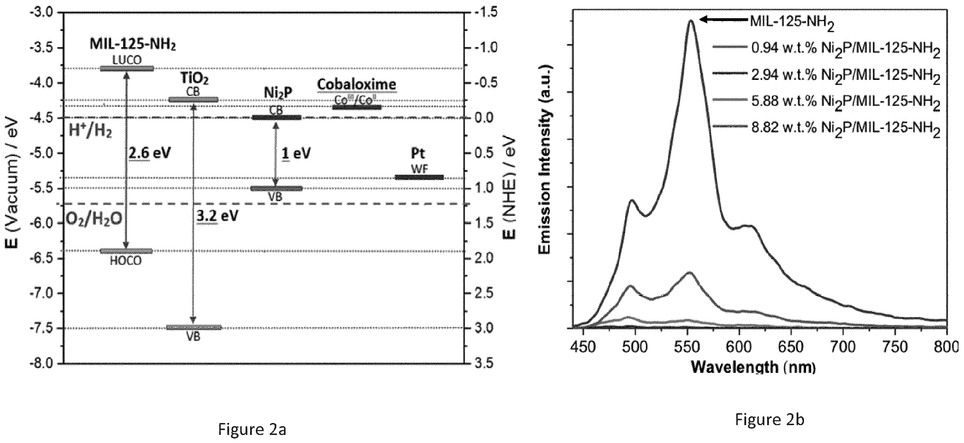

From the energy diagram as shown in Figure 2a, the conduction band of Ni₂P has a lower reduction potential (*E_{vac.}*= -4.50 eV) than the LUCOs of MIL-125-NH₂ (*E*_{*vac*.}= -3.80 eV), and is the same as the reduction potential of H⁺/H₂ (*E_{vac.}*= -4.50 eV, *E_{NHE}*= 0 eV). This large negative energy difference between MIL-125-NH₂ and Ni₂P stems from the discrete Ti₈O₈ cluster on MIL-125-NH₂ being exceptionally reducing.

This contrasts with TiO₂ in which the extended structure conduction band is at the lower reduction potential of -4.25 eV, compared to the discrete cluster. Consequently, in TiO₂, the lower reduction potential negates the reductive power of TiO₂ compared to MIL-125-NH₂, and therefore, decreases the effectiveness of the electron transfer to the Ni₂P. The smaller thermodynamic driving force confirms the lower performance of Ni₂P/TiO₂ compared to the photocatalytic system 1 of the present invention. Similarly, the cobaloxime complex *(E_{vac.}*= -4.25 eV) has a higher reduction potential than that of Ni₂P but lower that the LUCOs of MIL-125-NH₂; hence, the energy difference is less - a key reason for its inferior performance compared to the Ni₂P/MIL-125-NH₂ system.

In the case of Pt nanoparticles, which have much higher work function compared to Ni₂P (Figure 2a), the lower performance of Pt/MIL-125-NH₂ compared to Ni₂P/MIL-125-NH₂ (Table 1) is in agreement with the results obtained when TiO₂ is the photocatalyst.

A good co-catalyst should thus be able to trap protons, transfer electrons, bond the hydrogen atoms, and desorb the H₂ molecules formed. Ni₂P, with the presence of both Ni and P sites on the surface of the nanoparticles acting as hydride and proton-acceptor centers, should exhibit particular good behavior for H₂ generation.

Figure 1 schematically shows the mechanism for photocatalytic H₂ evolution. Upon visible light irradiation the MOF acts as a photosensitizer, subsequently an electron is excited from the HOCO (Highest Occupied Crystalline Orbital) and comparable energy orbitals to the LUCO (Lowest Unoccupied Crystalline Orbital) and comparable energy orbitals. Then this electron is captured by the Ni₂P NPs which act as catalytic centres, reducing the hydrogen cations to dihydrogen.

The effectiveness of charge separation in the Ni₂P/MIL-125-NH₂ was further verified by photoluminescence (PL) emission spectroscopy as shown in Figure 2b. The suspension of MIL-125-NH₂ exhibits fluorescencence with the maximum peak centered at ∼560 nm when excited at 420 nm. The addition of the Ni₂P nanoparticles diminishes the PL emission, indicating the electron transfer from MIL-125-NH₂ to Ni₂P and depopulating the excited electrons in MIL-125-NH₂. When the amount of Ni₂P is increased and reached 8.82 w.t. %, the mixture Ni₂P/MIL-125-NH₂ shows no detectable photoluminescent intensity, illustrating the key role of the nanoparticles in eliminating the electron-hole recombination.

While the above particular example of a transition metal phosphide co-catalyst 7 is Ni₂P, other transition metal phosphides or oxides can be used such as CoP or Fe₂P or NiO (see for example Figure 11), or MoP or Cu₃P or MnP or ZnP or Fe₂O₃ or CoO or CuO or MoO₃ or MnO.

The co-catalyst 7 may alternatively for example include a mix of different transition metal phosphide and/or oxide particles or nanoparticles. These co-catalysts provide higher efficiencies compared to conventional and expensive noble metal co-catalysts such as Pt/Rh co-catalysts.

The present invention thus provides a low-cost, highly stable, and easily prepared (based on mixing) photocatalytic system comprising a titanium-based metal-organic framework MOF and transition metal phosphide particles or nanoparticles that exhibits remarkable H₂ generation. The system appreciably outperforms Ni₂P/TiO₂ under UV irradiation and other visible-light-active MOF systems under visible irradiation, while maintains its integrity for a long time.

The absorptivity in the visible region, the charge separation in the titanium-based metal-organic framework MOF, the efficient attraction of electrons by transition metal phosphide particles or nanoparticles, or the inherent nature of the transition metal phosphide to catalyze the H₂ generation significantly enhanced photocatalytic activity. With high quantum efficiency of 27 and 6.6 % (at 400 and 450 nm, respectively) and easy scale-up synthesis of the titanium-based metal-organic framework MOF and the transition metal phosphide, this photocatalytic system opens a path to practical 'solar-driven' applications.

While the invention has been disclosed with reference to certain preferred embodiments, numerous modifications, alterations, and changes to the described embodiments, and equivalents thereof, are possible without departing from the sphere and scope of the invention. Accordingly, it is intended that the invention not be limited to the described embodiments, and be given the broadest reasonable interpretation in accordance with the language of the appended claims.

### REFERENCES

(1) Ramachandran, R.; Menon, R. K. International Journal of Hydrogen Energy 1998, 23, 593.
(2) Schoedel, A.; Ji, Z.; Yaghi, O. M. Nat Energy 2016, 1.
(3) Chaubey, R.; Sahu, S.; James, O. O.; Maity, S. Renewable and Sustainable Energy Reviews 2013, 23, 443.
(4) Lewis, N. S.; Nocera, D. G. Proceedings of the National Academy of Sciences 2006, 103, 15729.
(5) Gao, W.-Z.; Xu, Y.; Chen, Y.; Fu, W.-F. Chem. Commun. 2015, 51, 13217.
(6) Sun, Z.; Zheng, H.; Li, J.; Du, P. Energy & Environmental Science 2015, 8, 2668.
(7) Chen, X.; Shen, S.; Guo, L.; Mao, S. S. Chem. Rev. 2010, 110, 6503.
(8) Wang, S.; Wang, X. Small 2015, 11, 3097.
(9) Rowsell, J. L. C.; Yaghi, O. M. Microporous and Mesoporous Materials 2004, 73, 3.
(10) Li, B.; Wen, H.-M.; Cui, Y.; Zhou, W.; Qian, G.; Chen, B. Advanced Materials 2016, 28, 8819.
(11) Nelson, A. P.; Farha, O. K.; Mulfort, K. L.; Hupp, J. T. Journal of the American Chemical Society 2009, 131,458.
(12) Zhang, T.; Lin, W. Chem. Soc. Rev. 2014, 43, 5982.
(13) Wang, J.-L.; Wang, C.; Lin, W. ACS Catalysis 2012, 2, 2630.
(14) Meyer, K.; Bashir, S.; Llorca, J.; Idriss, H.; Ranocchiari, M.; van Bokhoven, J. A. Chemistry - A European Journal 2016, 22, 13894.
(15) Toyao, T.; Saito, M.; Horiuchi, Y.; Mochizuki, K.; Iwata, M.; Higashimura, H.; Matsuoka, M. Catalysis Science & Technology 2013, 3, 2092.
(16) Nasalevich, M. A.; Becker, R.; Ramos-Fernandez, E. V.; Castellanos, S.; Veber, S. L.; Fedin, M. V.; Kapteijn, F.; Reek, J. N. H.; van der Vlugt, J. I.; Gascon, J. Energy & Environmental Science 2015, 8, 364.
(17) Horiuchi, Y.; Toyao, T.; Saito, M.; Mochizuki, K.; Iwata, M.; Higashimura, H.; Anpo, M.; Matsuoka, M. The Journal of Physical Chemistry C 2012, 116, 20848.
(18) Gomes Silva, C.; Luz, I.; Llabrés i Xamena, F. X.; Corma, A.; García, H. Chemistry - A European Journal 2010, 16, 11133.
(19) Fateeva, A.; Chater, P. A.; Ireland, C. P.; Tahir, A. A.; Khimyak, Y. Z.; Wiper, P. V.; Darwent, J. R.; Rosseinsky, M. J. Angewandte Chemie International Edition 2012, 51, 7440.
(20) Wang, C.; deKrafft, K. E.; Lin, W. J. Am. Chem. Soc.2012, 134, 7211.
(21) Zhou, J.-J.; Wang, R.; Liu, X.-L.; Peng, F.-M.; Li, C.-H.; Teng, F.; Yuan, Y.-P. Applied Surface Science 2015, 346, 278.
(22) He, J.; Wang, J.; Chen, Y.; Zhang, J.; Duan, D.; Wang, Y.; Yan, Z. Chemical Communications 2014, 50, 7063.
(23) Xiao, J.-D.; Shang, Q.; Xiong, Y.; Zhang, Q.; Luo, Y.; Yu, S.-H.; Jiang, H.-L. Angewandte Chemie 2016, 128, 9535.
(24) Toyao, T.; Saito, M.; Dohshi, S.; Mochizuki, K.; Iwata, M.; Higashimura, H.; Horiuchi, Y.; Matsuoka, M. Chemical Communications 2014, 50, 6779.
(25) Sun, X.; Yu, Q.; Zhang, F.; Wei, J.; Yang, P. Catalysis Science & Technology 2016, 6, 3840.
(26) Ohno, T.; Sarukawa, K.; Tokieda, K.; Matsumura, M. Journal of Catalysis 2001, 203, 82.
(27) Shi, Y.; Zhang, B. Chem. Society Reviews 2016, 45, 1529.
(28) Zou, X.; Zhang, Y. Chem. Society Reviews 2015, 44, 5148.
(29) Hansen, M. H.; Stern, L.-A.; Feng, L.; Rossmeisl, J.; Hu, X. Physical Chemistry Chemical Physics 2015, 17, 10823.
(30) Chen, Y.; Qin, Z. Catalysis Science & Technology 2016, 6, 8212.
(31) Liu, P.; Rodriguez, J. A. J. Am. Chem. Soc. 2005, 127, 14871.
(32) Kumar, D. P.; Choi, J.; Hong, S.; Reddy, D. A.; Lee, S.; Kim, T. K. ACS Sustainable Chemistry & Engineering 2016, 4, 7158.
(33) Maeda, K.; Teramura, K.; Lu, D.; Takata, T.; Saito, N.; Inoue, Y.; Domen, K. Nature 2006, 440, 295.
(34) Nasalevich, M. A.; Hendon, C. H.; Santaclara, J. G.; Svane, K.; van der Linden, B.; Veber, S. L.; Fedin, M. V.; Houtepen, A. J.; van der Veen, M. A.; Kapteijn, F.; Walsh, A.; Gascon, J. 2016, 6, 23676.
(35) Hendon, C. H.; Tiana, D.; Fontecave, M.; Sanchez, C.; D'arras, L.; Sassoye, C.; Rozes, L.; Mellot-Draznieks, C.; Walsh, A. J. Am. Chem. Soc. 2013, 135, 10942.

## Claims

1. Photocatalytic system (1) comprising or consisting of:
- a titanium-based metal-organic framework (MOF) based on or including a single ligand type or a plurality of different ligand types for generating photo-generated charge carriers upon irradiation; and
- a co-catalyst (7) to thwart recombination of the photo-generated charge carriers and allow electrons to drive a chemical reaction, wherein the co-catalyst has a conduction band having an energy value or level that is (i) lower than or equal to that of a lowest unoccupied crystalline orbital (LUCO) of the titanium-based metal-organic framework (MOF) and (ii) higher than or equal to a reduction potential energy of H⁺ to H₂.

2. System according to claim 1, wherein the co-catalyst (7) comprises or consists of particles or nanoparticles (NPs) comprising or consisting of at least one transition metal phosphide or at least one transition metal oxide.

3. System according to claim 1 or 2, further including means (9) for preventing the production of O₂, or means for removing produced O₂.

4. System according to any one of the previous claims, wherein the titanium-based metal-organic framework (MOF) includes or consist of MIL-125-NH₂ or derivatives thereof.

5. System according to any one of the previous claims 2 to 4, wherein the transition metal phosphide is Ni₂P, CoP or Fe₂P, or the transition metal oxide is NiO.

6. System according to any one of previous claims 3 to 5, wherein the means (9) for preventing the production of O₂ includes triethylamine (TEA), or triethanolamine (TEOA), or ascorbic acid and related ascorbate anions, or ethylenediaminetetraacetic acid (EDTA).

7. System according to any one of previous claims 3 to 5, wherein the means (9) for removing produced O₂ includes a gas separating membrane.

8. System according to any one of the previous claims, wherein the photocatalytic system (1) is a noble-metal-free photocatalytic system; or wherein the photocatalytic system (1) is a photosensitizer-free photocatalytic system.

9. System according to any previous claim, wherein the ligand type is one of the following: 2-Aminoterephthalic acid, or 2,5-Diaminoterephthalic acid, or 2-Hydroxyterephthalic acid or 2,5-Dihydroxyterephthalic acid or 2-Bromoterephthalic acid or 2-Nitroterephthalic acid or 2,5-Dichloroterephthalic acid or 2-Methylterephthalic acid.

10. System according to any previous claim, wherein the transition metal phosphide is Ni₂P and the titanium-based metal-organic framework (MOF) includes or consists of MIL-125-NH₂.

11. Mixture including the photocatalytic system (1) according to any one of the previous claims, and further including an organic solvent and water.

12. Mixture according to the previous claim wherein the organic solvent is acetonitrile or methanol.

13. Hydrogen generator including the photocatalytic system (1) or mixture according to any one of the previous claims.

14. Hydrogen generating method including the steps of:
- providing the mixture according to claim 11 or 12; and
- irradiating the mixture with electro-magnetic radiation (5) in the UV and/or visible light region or with solar radiation.

15. Method for producing a photocatalytic system (1), the method consisting of the steps of:
- providing a titanium-based metal-organic framework (MOF) based on or including a single ligand type or a plurality of different ligand types for generating photo-generated charge carriers upon irradiation;
and
- mixing, with the titanium-based metal-organic framework (MOF), a co-catalyst (7) to thwart recombination of the photo-generated charge carriers and allow electrons to drive a chemical reaction, wherein the co-catalyst has a conduction band having an energy value or level that is (i) lower than or equal to that of a lowest unoccupied crystalline orbital (LUCO) of the titanium-based metal-organic framework (MOF) and (ii) higher than or equal to a reduction potential energy of H⁺ to H₂.
